# EUROPEAN PATENT SPECIFICATION

(11) **EP 2 068 421 B1**
(45) Date of publication and mention of the grant of the patent: **03.09.2014**
(21) Application number: 08020541.2
(22) Date of filing: 26.11.2008
(51) Int. Cl.: H02J 7/14, B60L 11/18, H02M 7/23, H02J 3/32, H02J 7/34, H02J 7/02, H02P 9/30

(54) **Voltage regulator and generator assembly for charging batteries**
Spannungsregler und Generatoranordnung zum Laden von Batterien
Régulateur de tension et ensemble générateur pour charger des batteries

(30) Priority: 03.12.2007 IT MI20072261
(43) Date of publication of application: 10.06.2009
(73) Proprietor: DUCATI ENERGIA S.p.A., 40132 Bologna (IT)
(72) Inventor: Regazzi, Gianni, 40050 Argelato, Bologna (IT); Calabri, Pierluigi, 40068 San Lazzaro di S., Bologna (IT); De Angelis, Alessandro, 63100 Ascoli Piceno (IT)
(74) Representative: Brunacci, Marco

(56) References cited:
- EP-A1- 1 601 078
- US-A- 4 537 174
- US-A1- 2001 013 768

## Description

### BACKGROUND OF THE INVENTION

This invention refers to a voltage regulator, and to a voltage regulator and generator assembly for feeding a charging voltage to batteries for motor vehicles, such as motorcycles and the like.

### STATE OF THE ART

Systems for automatically charging the batteries of motor vehicles usually comprise a voltage generator of the permanent magnet type, and a three-phase voltage regulator, of the parallel type, in which the individual phases of the voltage generator are selectively connected to a positive terminal of the battery by a rectifier bridge, and respectively are connected to a ground circuit by an electronic switch piloted by a control unit, once the voltage of the battery has reached a desired value. A voltage regulator and battery charging system of this kind are described for example in EP-A-1 601 078 of which this invention constitutes an improvement.

As specified in the aforementioned patent, the voltage regulator utilizes programmable switches of power MOS type, controlled by a memory circuit for memorising the charging voltage of the battery provided by a voltage measuring circuit.

The use of power MOS control switches was suggested in that they offer the possibility to reduce the dissipated power as compared to the usual SCR switches.

However, the solution proposed by EP-A- 1 601 078 proves to be somewhat complicated and still entails an excessive dissipation of the electric power of the voltage generator.

### OBJECTS OF THE INVENTION

There is consequently a need to find a new solution whereby it is possible to obviate the aforementioned drawback, to improve previously known voltage regulators and battery charging systems.

In particular, one object of the invention is to provide a voltage regulator, and a voltage regulator and generator assembly for charging the batteries of motor vehicles, for example motorcycles and the like, which make use of an extremely simplified solution, and offer greater simplicity in controlling the electronic switches for the selective connection to ground of the phase windings of the voltage generator.

A further object of the invention is to provide a voltage regulator and a voltage regulator and voltage generator assembly for charging the batteries of motor vehicles, as mentioned above, which in addition to a structural simplification also ensure a reduction in the dissipation of the electric power.

### BRIEF DESCRIPTION OF THE INVENTION

The foregoing can be achieved by a voltage regulator according to claim 1, and by voltage regulator and voltage generator assembly for automatically charging a battery of motor vehicles, according to claim 4.

According to the invention, a voltage regulator has been provided suitable for supplying a DC charging voltage to a battery of a motor vehicle, provided by a three-phase AC voltage magneto generator, in which the voltage regulator comprises a phase-voltage control unit for each phase of the magneto generator, each phase control unit having rectifier diodes between inlet and outlet terminals connectable to phase windings of the magneto generator, and to a terminal of the battery; each of the inlet terminals of the phase control units being connectable to ground by an electronic short-circuiting switch having a control electrode operatively connected to a battery-voltage detecting and to a battery-voltage measuring circuit, characterised in that each phase control unit comprises:
first and second inlet terminals connectable to at least a phase winding of the magneto generator, to be fed with respective AC voltages shifted by 180 electrical degrees;
each inlet terminal of the phase control unit being connected to an outlet terminal by a respective rectifier diode and to a respective short-circuiting switch, and in which the control electrode of the short-circuiting switch of each inlet terminal is connected either to the other inlet terminal of the phase control unit by a first resistor, and to the battery-voltage detecting circuit by a series circuit comprising a second resistor and a decupling diode.

According to another embodiment of the invention, a magneto generator and voltage regulator assembly has been provided for charging a battery characterised by comprising:
a voltage regulator having first, second and third phase control units as previously specified; and
a voltage generator having a permanent magnet rotor and a three-phase stator circuit having phase windings connected to the first and second inlets terminals of each phase control unit, said phase windings being conformed and connected to a respective phase control unit to feed the first and second inlet terminals with phase-voltages shifted by 180 electrical degrees.

### BRIEF DESCRIPTION OF THE DRAWINGS

These and further characteristics of the voltage regulator and of the battery charging assembly for motor vehicles according to this invention, and some preferential embodiments will be more clearly evident from the following description, with reference to the accompanying drawings, in which:
Fig. 1 shows a circuit diagram of a first embodiment;
Fig. 2 shows a circuit diagram of a second embodiment.

### DETAILED DESCRIPTION OF THE INVENTION

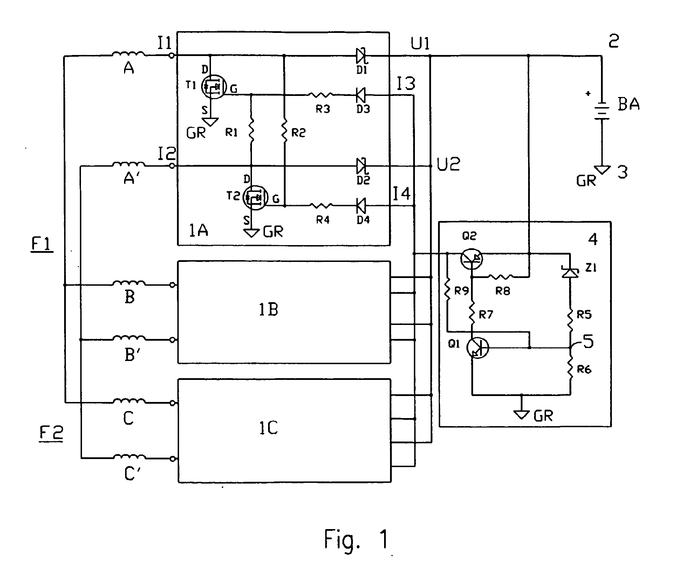

With reference to figure 1, a detailed description will be given of the general characteristics of the voltage regulator and of the voltage generator-voltage regulator assembly for charging batteries according to a preferential embodiment of this invention.

The assembly comprises a three-phase alternator or voltage generator, for feeding the charging voltage to battery of a motor vehicle through an improved voltage regulator conformed to reduce the power losses; the voltage generator may be of any suitable type, preferably of the permanent magnet type which, unlike the usual voltage generators, in the case of a first embodiment comprises two star-connected three-phase windings which determine the simplification of the control electronics, without a corresponding increase in the overall dimensions of the voltage generator.

In particular, the voltage generator comprises a permanent magnet rotor, per se known and not shown, and an innovative stator comprising first and second three-phase star-connected circuits F1 and F2, that are conformed and arranged for providing at corresponding phase windings, AC voltages shifted out of 180 electrical degrees.

For descriptive simplicity, the phase windings or coils relating to the three-phase circuit F1 are indicated by references A, B and C, while the phase windings of the other three-phase circuit F2 are indicated by references A', B' and C'.

Also in figure 1, the reference numbers 1A, 1B and 1C have been used to indicate the three-phase control units for controlling the DC charging voltage of a battery BA, forming part of the voltage regulator and of the automatic battery voltage charging assembly according to the invention; in particular, figure 1 shows in detail the phase control unit 1A only, in that the same circuit of the control unit 1A is considered to be repeated identically for the other two control units 1B and 1C of the voltage regulator.

The voltage regulator consequently comprises the aforementioned control units 1A, 1B and 1C, each of which having a first inlet terminal I1 directly connected to the phase winding A of the first three-phase circuit F1, and a second inlet terminal I2 directly connected to the corresponding phase winding A' of the second three-phase circuit F2; consequently the terminals I1 and I2 are fed with phase voltages shifted out by 180 electrical degrees.

Each phase control units of the voltage regulator is AC powered by the windings of the three-phase circuits F1 and F2 of the voltage generator, and supplies D.C. power to the battery BA by means of rectifier diodes comprising Schottky diodes D1, D2 connected between the phase windings A, A' and the positive terminal 2 of the battery BA.

Each control unit 1A, 1B, 1C of the voltage regulator also comprises electronic switches T1, T2 for short-circuiting to ground GR the individual phase windings A, A', consisting for example of a power MOS switch T1 for the phase A, and T2 for the phase A'; the two switches T1 and T2 are selectively controlled either by the DC voltages of the phase windings of the three-phase circuits F1 and F2 of the voltage generator, or by a circuit 4 for sensing and measuring the voltage or the charge degree of the battery BA.

More precisely, with reference to the control unit 1A of figure 1, the phase winding A is connected to the anode of the Schottky diode D1, which is characterised by a low conduct resistance, and by a low voltage drop; conversely, the cathode of D1 is connected to the positive terminal 2 of the battery BA. Likewise, the Schottky diode D2 has its anode connected to the phase winding A' and its cathode again to the positive terminal 2 of the battery BA. The phase windings A and A' are also connected to a respective main circuit of T1 and T2 comprising the Drain terminal D of the power MOS T1 and T2, which in turn has the Source electrode S connected to ground GR.

The Gate or control electrode G of T1 of the winding A is connected by a first resistor R1, to the phase winding A', while the control electrode G of T2 is connected to the winding A by a second resistor R2. The Gates G of T1 and T2 are also piloted by a voltage sensing circuit 4 for measuring the charge degree of the battery BA, by a series circuit consisting of a resistor in series to a decoupling diode for the phase windings A and A', in particular R3 and D3 for the power MOS T1 and R4 and D4 for the power MOS T2.

The voltage sensing circuit 4 for sensing the charge degree of the battery BA is provided by a network with hysteresis for measuring the battery voltage, comprising a Zener diode Z1 with the cathode connected to the positive terminal 2 of the battery, and the anode to a resistor R5 of a voltage divider R5 and R6, in which the resistor R6 is connected to ground GR. The resistor R9 intentionally provides a hysteresis on the output voltage of the measuring circuit 4, that is to say, it makes sure that on the collector of Q2 and consequently on the Gates of the power MOS there is a voltage of such a value that the switches themselves T1 and T2 are switched ON if the battery voltage is above a pre-established value, or switched OFF if the battery voltage is below the pre-established value. In this way the MOSS may switch from the ON to OFF condition and vice versa, and are prevented from switching from ON to OFF and vice versa by a linear variation of the battery voltage. The mutual connection point 5 between R5, R6 on the contrary, is connected to the base of an npn transistor Q1 which has its emitter connected to ground GR and its collector connected, by the voltage divider R7, R8, to the base of a pnp transistor Q2. In turn, Q2 has its emitter connected to the terminal 2 of the battery BA, while the collector is connected to the base of Q1 by the resistor R9, and the diodes D3 and D4 in series with the previously described resistors R3 and R4.

Assuming that the circuit 4 for sensing the charge degree of the battery BA is not active, then the battery BA is being charged in that T1 and T2 are piloted exclusively by the voltages of the phase windings A' and A respectively. In other words, the voltage value with respect to ground, at the positive terminal 2 of the battery, is such as to prevent a sufficient current to flow on the voltage divider R5-R6 and therefore it is not able to polarise Q1; consequently, Q1 is disabled, as Q2. Therefore, in this case the control of the power MOS T1 and T2 occurs exclusively with the voltages of the phases A' and A respectively.

In particular, when a positive half wave is provided to the Drain D of T1, then on the Gate G there is a negative half wave due to the fact that A' is in phase opposition with A. Therefore, T1 is disabled while the Schottky diode D1 is polarised directly and consequently is conducting the current to charge the battery. Vice versa T2 conducts since it has a positive voltage with respect to ground on the Gate G, and therefore the current flows from the ground GR through T2 towards the winding A'. Conversely, when the negative half wave is provided to the Drain D of T1 the reverse occurs, with T1 in conductive or ON state and T2 disabled, or OFF.

When the voltage value at the positive terminal 2 of the battery exceeds a pre-established regulation value, then a current sufficient to polarise Q1 flows through the circuit of the network 4, which in turn brings into conduction Q2 which, by means of the resistor R9, brings Q1 to saturation thereby achieving the hysteresis on the battery voltage. By means of Q2 a current flows from the battery BA towards the diode-resistance series circuit D3-R3 and D4-R4 which brings into conduction the power MOS T1 and T2. Depending upon the voltage existing on the Drain D of the power MOS, the current from the generator does not flow into the battery but towards the ground, closing itself on the phase windings. In particular, if there is a positive half wave on the Drain D of T1, then T1 is in saturation and the current goes to the ground by T1 itself. Vice versa, T2 has a negative voltage of the Drain-Source circuit and therefore the current flows by means of T2 itself towards the phase winding A'. Conversely, if there is a negative half wave on the Drain of T1 then, since the latter is in conduction, the current from ground flows on the phase winding A. The power MOS T2 also conducts with a positive Drain voltage, and therefore the current by means of T2 flows from the phase winding towards the ground. The above applies also to the remaining control blocks 1B and 1C.

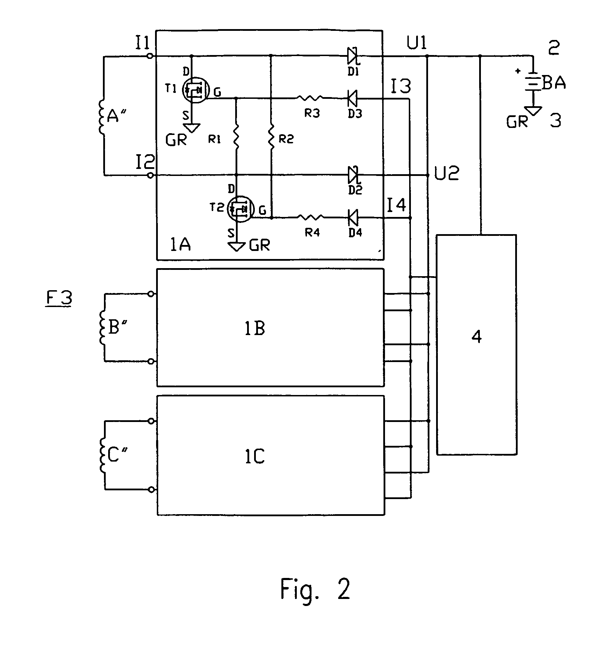

Figure 2 shows an alternative solution to the previous one. The phase control units 1A, 1B, 1C and 4 of figure 2 are identical to those of figure 1, whereas the structure of the stator circuit of the voltage generator changes and is now composed of a single three-phase circuit F3 having three separate phase winding coils A", B" and C" each of which is connected between the inlet terminals I1 and I2 of a respective control unit 1A, 1B and 1C. Since the alternate voltages present at the ends of each winding coil A", B" and C" are shifted out from each other by 180 electrical degrees, it can consequently be easily inferred that the working of the voltage regulator and voltage generator assembly of figure 2 is similar to that shown in figure 1. In fact, if at one end of a phase winding A", B" and C" there is a positive half wave, at the other end there will be a negative half wave; consequently the AC voltages at the inlet terminals of the control units 1A, 1B and 1C of figure 2 are identically shifted of 180 degrees as to those of the control units previously described in figure 1.

## Claims

1. A voltage regulator suitable for supplying a DC charging voltage to a battery (BA) of a motor vehicle, provided by a three-phase AC voltage magneto generator (F1, F2, F3), in which the voltage regulator comprises a phase-voltage control unit (1A, 1B, 1C) for each phase (A, B, C) of the magneto generator (F1; F2; F3), each phase control unit (1A, 1B, 1C) having rectifier diodes (D) between inlet (I) and outlet (U) terminals connectable to phase windings (A, B, C) of the magneto generator, and to a terminal (2) of the battery (BA); each of the inlet terminals (I) of the phase control units (1A, 1B, 1C) being connectable to ground (GR) by an electronic short-circuiting switch (T) having a control electrode (G) operatively connected to a battery-voltage detecting and to a battery-voltage measuring circuit (4), **characterised in that** each phase control unit (1A, 1B, 1C) comprises:
first and second inlet terminals (I1, I2) connectable to at least a phase winding (A, B, C) of the magneto generator, to be fed with respective AC voltages shifted by 180 electrical degrees;
each inlet terminal (I1, I2) of the phase control unit (1A, 1B, 1C) being connected to an outlet terminal (V1, V2) by a respective rectifier diode (D1, D2) and to a respective short-circuiting switch (T1, T2), and in which the control electrode (G) of the short-circuiting switch (T1, T2) of each inlet terminal (I1, I2) is connected to the other inlet terminal (I1, I2) of the phase control units by a first resistor (R1, R2) and to the battery-voltage detecting circuit (4) by a series circuit comprising a second resistor (R3, R4) and a decupling diode (D3, D4).

2. The voltage regulator according to claim 1, **characterised in that** each inlet terminal (I1, 12) of each voltage control circuit (1A, 1B, 1C) is directly connected to a terminal (2) of the battery (BA) by a Schottky diode (D1, D2).

3. The voltage regulator according to claim 1, **characterised in that** the electronic short-circuiting switch (T1, T2) is a power MOS.

4. A magneto generator and voltage regulator assembly for charging a battery (BA) **characterised by** comprising:
a voltage regulator having first, second and third phase control units (1A, 1B, 1C) according to claim 1; and
a voltage generator having a permanent magnet rotor and a three-phase stator circuit (F1, F2; F3) having phase windings (A, B, C) connected to the first and second inlets terminals (I1, I2) of each phase control unit (1A, 1B, 1C), said phase windings (A, B, C) being conformed and connected to a respective phase control unit (1A, 1B, 1C) to feed the first and second inlet terminals (I1, I2) with phase-voltages shifted by 180 electrical degrees.

5. The magneto generator and voltage regulator assembly according to claim 4, **characterised in that** the stator circuit comprises first and second three-phase windings (F1, F2) each having star-connected three phase coils (A, B, C; A', B', C'), the phase-coils of said first and second stator windings (F1, F2) being conformed and connected to provide the first and second inlet terminals (I1, 12) of the phase control unit (1A, 1B, 1C) with phase voltages shifted by 180 electrical degrees.

6. The magneto generator and voltage regulator assembly according to claim 4, **characterised in that** the stator circuit comprises a three-phase stator winding (F3) having first, second and third phase coils (A" , B", C"), each phase coil (A", B", C") being arranged and connected between the first and second inlet terminals (I1, I2) of a corresponding phase control unit (1A, 1B, 1C) to provide phase-voltages at the ends of each of said first, second and third phase coil (A", B", C") shifted out from each other by 180 electrical degrees.

## Patentansprüche

1. Ein Spannungsregler zur Versorgung einer Batterie (BA) eines Motorfahrzeugs mit einer Wechsel-Ladespannung, die von einem Dreiphasen-Wechselspannungs-Permanentmagnet-Generator (F1, F2, F3) bereitgestellt wird, wobei der Spannungsregler eine Phasenspannungs-Steuereinheit (1A, 1B, 1C) für jede Phase (A, B, C) des Permanentmagnet-Generators (F1; F2; F3) umfasst, wobei jede Phasen-Steuereinheit (1A, 1B, 1C) Gleichrichter-Dioden (D) zwischen Eingangs- und Ausgangs-Anschlüssen (I, U) aufweist, die mit Phasenwicklungen (A, B, C) des Permanentmagnet-Generators und mit einem Anschluss (2) der Batterie (BA) verbindbar sind, wobei die Eingangs-Anschlüsse (I) der Phasen-Steuereinheiten (1A, 1B, 1C) jeweils über einen elektronischen Kurzschluss-Schalter (T) mit einer Steuerelektrode (6), die operativ mit einer Batteriespannungs-Erfassungs- sowie einer Batteriespannungs-Messschaltung (4) verbunden ist, gegen Masse (GR) geschaltet werden können, **dadurch gekennzeichnet, dass** jede Phasen-Steuereinheit (1A, 1B, 1C) umfasst:
erste und zweite Eingangs-Anschlüsse (I1, I2), die mit zumindest einer Phasenwicklung (A, B, C) des Permanentmagnet-Generators verbunden werden können, die mit Wechselspannungen gespeist werden sollen, die jeweils um 180 elektrische Grad phasenverschoben sind;
wobei jeder Eingangs-Anschluss (I1, I2) der Phasen-Steuereinheit (1A, 1B, 1C) über eine entsprechende Gleichrichter-Diode (D1, D2) mit einem Ausgangs-Anschluss (V1, V2) und mit einem entsprechenden Kurzschluss-Schalter (T1, T2) verbunden ist, und wobei die Steuerelektrode (G) des Kurzschluss-Schalters (T1, T2) eines jeweiligen Eingangs-Anschlusses (I1, I2) über einen ersten Widerstand (R1, R2) mit dem anderen Eingangs-Anschluss (I1, I2) der Phasen-Steuereinheiten und über eine Reihenschaltung umfassend einen zweiten Widerstand (R3, R4) sowie eine Entkopplungsdiode (D3, D4) mit der Batteriespannungs-Erfassungsschaltung (4) verbunden ist.

2. Der Spannungsregler gemäß Anspruch 1, **dadurch gekennzeichnet, dass** jeder Eingangs-Anschluss (I1, I2) einer jeweiligen Spannungs-Steuerschaltung (1A, 1B, 1C) über eine Schottky-Diode (D1, D2) direkt mit einem Anschluss (2) der Batterie (BA) verbunden ist.

3. Der Spannungsregler gemäß Anspruch 1, **dadurch gekennzeichnet, dass** es sich bei dem elektronischen Kurzschluss-Schalter (T1, T2) um einen Power-MOS handelt.

4. Ein Permanentmagnet-Generator sowie eine Spannungsregler-Anordnung zum Laden einer Batterie (BA), **gekennzeichnet durch** einen Spannungsregler mit ersten, zweiten und dritten Phasen-Steuereinheiten (1A, 1B, 1C) gemäß Anspruch 1 sowie
einen Spannungsgenerator mit einem Permanentmagnet-Rotor sowie einer Drehstrom-Statorschaltung (F1, F2; F3) mit Phasenwicklungen (A, B, C), die mit den ersten und zweiten Eingangs-Anschlüssen (I1, I2) der jeweiligen Phasen-Steuereinheit (1A, 1B, 1C) verbunden sind, wobei die Phasenwicklungen (A, B, C) jeweils an eine entsprechende Phasen-Steuereinheit (1A, 1B, 1C) angepasst und mit dieser verbunden sind, um die ersten und zweiten Eingangs-Anschlüsse (I1, I2) mit Phasenspannungen zu versorgen, die um 180 elektrische Grad phasenverschoben sind.

5. Der Permanentmagnet-Generator und die Spannungsregler-Anordnung gemäß Anspruch 4, **dadurch gekennzeichnet, dass** die Statorschaltung erste und zweite Drehstromwicklungen (F1, F2) umfasst, die jeweils Drehstromspulen (A, B, C; A', B', C') in Sternschaltung aufweisen, wobei die Phasenspulen der ersten und zweiten Statorwicklungen (F1, F2) jeweils an die ersten und zweiten Eingangs-Anschlüsse (I1, I2) der Phasen-Steuereinheit (1A, 1B, 1C) angepasst und mit diesen verbunden sind, um diese mit Phasenspannungen zu versorgen, die um 180 elektrische Grad phasenverschoben sind.

6. Der Permanentmagnet-Generator und die Spannungsregler-Anordnung gemäß Anspruch 4, **dadurch gekennzeichnet, dass** die Statorschaltung eine Drehstrom-Statorwicklung (F3) mit ersten, zweiten und dritten Phasenspulen (A", B", C") umfasst, wobei jede Phasenspule (A", B", C") zwischen den ersten und zweiten Eingangs-Anschlüssen (I1, I2) einer entsprechenden Phasen-Steuereinheit (1A, 1B, 1C) angeordnet und geschaltet sind, um an den Ausgängen der ersten, zweiten bzw. dritten Phasenspule (A", B", C") jeweils Phasenspannungen bereitzustellen, die um 180 elektrische Grad zueinander phasenverschoben sind.

## Revendications

1. Régulateur de tension approprié pour fournir une tension de charge en courant continu à une batterie (BA) d'un véhicule à moteur, délivrée par un magnéto-générateur de tension alternative triphasée (F1, F2, F3), le régulateur de tension comprenant une unité de commande de tension par phase (1A, 1B, 1C) pour chaque phase (A, B, C) du magnéto-générateur (F1 ; F2 ; F3), chaque unité de commande de phase (1A, 1B, 1C) comportant des diodes de redressement (D) entre des bornes d'entrée (I) et de sortie (U) qui peuvent être reliées à des enroulements de phase (A, B, C) du magnéto-générateur et à une borne (2) de la batterie (BA), chacune des bornes d'entrée (I) des unités de commande de phase (1A, 1B, 1C) pouvant être connectée à la terre (GR) par l'intermédiaire d'un commutateur électronique de court-circuit (T) ayant une électrode de commande (G) connectée de manière fonctionnelle à un circuit (4) de détection de tension de batterie et de mesure de tension de batterie, **caractérisé en ce que** chaque unité de commande de phase (1A, 1B, 1C) comprend :
des première et deuxième bornes d'entrée (I1, I2) pouvant être connectées à au moins un enroulement de phase (A, B, C) du magnéto-générateur, destinées à être alimentées par des tensions alternatives respectives décalées électriquement de 180 degrés ;
chaque borne d'entrée (I1, I2) de l'unité de commande de phase (1A, 1B, 1C) étant connectée à une borne de sortie (V1, V2), par l'intermédiaire d'une diode de redressement respective (D1, D2), et à un commutateur de court-circuit respectif (T1, T2), et dans lequel l'électrode de commande (G) du commutateur de court-circuit (T1, T2) de chaque borne d'entrée (I1, I2) est connectée à l'autre borne d'entrée (I1, I2) des unités de commande de phase, par l'intermédiaire d'une première résistance (R1, R2), et au circuit (4) de détection de tension de batterie, par l'intermédiaire d'un circuit série comprenant une deuxième résistance (R3, R4) et une diode de découplage (D3, D4).

2. Régulateur de tension selon la revendication 1, **caractérisé en ce que** chaque borne d'entrée (I1, I2) de chaque circuit de commande de tension (1A, 1B, 1C) est connectée directement à une borne (2) de la batterie (BA) par l'intermédiaire d'une diode Schottky (D1, D2).

3. Régulateur de tension selon la revendication 1, **caractérisé en ce que** le commutateur électronique de court-circuit (T1, T2) est un transistor MOS de puissance.

4. Ensemble magnéto-générateur et régulateur de tension destiné à charger une batterie (BA), **caractérisé en ce qu'**il comprend :
un régulateur de tension comportant des première, deuxième et troisième unités de commande de phase (1A, 1B, 1C), selon la revendication 1 ; et
un générateur de tension comportant un rotor à aimant permanent et un circuit de stator triphasé (F1, F2 ; F3) ayant des enroulements de phase (A, B, C) connectés aux première et deuxième bornes d'entrée (I1, I2) de chaque unité de commande de phase (1A, 1B, 1C), lesdits enroulements de phase (A, B, C) étant conformés et connectés à une unité de commande de phase respective (1A, 1B, 1C) pour fournir aux première et deuxième bornes d'entrée (I1, I2) des tensions par phase décalées électriquement de 180 degrés.

5. Ensemble magnéto-générateur et régulateur de tension selon la revendication 4, **caractérisé en ce que** le circuit de stator comprend des premier et deuxième enroulements triphasés (F1, F2) ayant chacun trois enroulements de phase connectés en étoile (A, B, C ; A', B', C'), les enroulements de phase desdits premier et deuxième enroulements de stator (F1, F2) étant conformés et connectés pour fournir aux première et deuxième bornes d'entrée (I1, I2) de l'unité de commande de phase (1A, 1B, 1C) des tensions par phase décalées électriquement de 180 degrés.

6. Ensemble magnéto-générateur et régulateur de tension selon la revendication 4, **caractérisé en ce que** le circuit de stator comprend un enroulement de stator triphasé (F3) ayant des premier, deuxième et troisième enroulements de phase (A", B", C"), chaque enroulement de phase (A", B", C") étant disposé et connecté entre les première et deuxième bornes d'entrée (I1, I2) d'une unité de commande de phase correspondante (1A, 1B, 1C) pour fournir aux extrémités de chacun desdits premier, deuxième et troisième enroulements de phase (A", B", C") des tensions par phase décalées électriquement les unes des autres de 180 degrés.
